# EUROPÄISCHE PATENTSCHRIFT

(11) **EP 2 831 981 B1**
(45) Veröffentlichungstag und Bekanntmachung des Hinweises auf die Patenterteilung: **14.09.2016**
(21) Anmeldenummer: 13721974.7
(22) Anmeldetag: 13.05.2013
(51) Int. Cl.: H02K 11/33, H02K 5/10, H02K 9/06

(54) **ELEKTRONIKGEHÄUSE FÜR EINEN ELEKTROMOTOR MIT BERÜHRUNGSSCHUTZ**
ELECTRONICS HOUSING FOR AN ELECTRIC MOTOR WITH PROTECTION AGAINST ACCIDENTAL CONTACT
BOITIER ELECTRONIQUE DE MOTEUR ELECTRIQUE A PROTECTION CONTRE LES CONTACTS ACCIDENTELS

(30) Priorität: 20.07.2012 DE 102012106605
(43) Veröffentlichungstag der Anmeldung: 04.02.2015
(73) Patentinhaber: ebm-papst Mulfingen GmbH & Co. KG, 74673 Mulfingen (DE)
(72) Erfinder: STURM, Michael, 97980 Bad Mergentheim-Rot (DE); SAUER, Thomas, 97980 Bad Mergentheim (DE); MASCHKE, Matthias, 74635 Kupferzell (DE)
(74) Vertreter: Peter, Julian
(86) Internationale Anmeldenummer: PCT/EP2013/059830
(87) Internationale Veröffentlichungsnummer: WO 2014/012691

(56) Entgegenhaltungen:
- EP-A2- 1 361 644
- DE-A1- 10 313 273
- JP-A- 2001 128 407

## Beschreibung

Die vorliegende Erfindung betrifft ein Elektronikgehäuse für einen Elektromotor, bestehend aus einem Gehäuseaufnahmeteil mit einem Gehäuseboden und einer den Gehäuseboden umfassenden Gehäusewandung und mit einer dem Gehäuseboden gegenüberliegenden Gehäuseöffnung, wobei in dem Gehäuseaufnahmeteil ein Motorelektronikbauteil angeordnet ist mit einer Elektronik-Leiterplatte, die parallel zur Öffnungsebene der Gehäuseöffnung verläuft.

Es ist bekannt, beispielsweise die Elektronik-Leiterplatten derartiger Elektronik-Gehäuse zum Schutz vor äußeren Einwirkungen komplett mit einer Vergussmasse zu vergießen. Dies ist ein sehr kostspieliger Prozess. Durch diesen Verguss wird die Elektronik-Leiterplatte vor Berührungen, Schmutz und äußeren Einflüssen geschützt, insbesondere wenn das Elektronik-Gehäuse auf Grund von Reparaturmaßnahmen vom Elektromotor entfernt wird. Zudem dient der Verguss der Elektronik-Leiterplatte dazu, elektrostatische Entladungen zu vermeiden. Dokument JP 2001 128 407 offenbart ein Elektronikgehäuse gemäß dem Oberbegriff des Anspruchs 1.

Der vorliegenden Erfindung liegt die Aufgabe zu Grunde, ausgehend von einem Elektronik-Gehäuse der eingangs beschriebenen Art, dieses derart zu verbessern, dass ein Berührungsschutz der Elektronik-Leiterplatte auf konstruktiv einfache und kostengünstige Weise erreicht wird.

Die Erfindung wird durch die Merkmale des Anspruchs 1 definiert. Erfindungsgemäß wird die Aufgabe dadurch gelöst, dass auf der Elektronik-Leiterplatte oder am Motorelektronikbauteil auf der von der vom Gehäuseboden abgekehrten Seite der Leiterplatte ein die Leiterplatte abdeckendes Berührungsschutzbauteil aus einem elektrisch isolierenden Material lösbar angeordnet ist, das zumindest teilweise eine Gitterstruktur als Luftdurchlass aufweist. Das Berührungsschutzbauteil ist als Abdeckplatte ausgebildet, die die Gehäuseöffnung und damit die darunterliegende Elektronik-Leiterplatte abdeckt und auf Grund der vorhandenen Gitterstruktur eine unmittelbare Kontaktierung der Elektronik-Leiterplatte beim Ein- und Ausbau verhindert. Vorteilhafterweise ist das erfindungsgemäße Berührungsschutzbauteil derart geformt, dass es eine Vertiefung für die Aufnahme eines Lüfterrades eines Innenlüfters des zum Einsatz kommenden Motors aufweist. Hierbei ist diese Vertiefung derart gestaltet, dass die von dem Lüfterrad erzeugte Luftströmung radial durch Öffnungen des Berührungsschutzbauteils strömen und durch die mittlere Öffnung im Berührungsschutzbauteil zu dem Lüfter zurückströmen kann.

Weitere vorteilhafte Ausführungsformen der Erfindung sind in den Unteransprüchen enthalten und an Hand der in den beiliegenden Zeichnungen dargestellten Ausführungsbeispiele wird die Erfindung näher erläutert.

Es zeigen:
- Fig. 1: eine Ansicht eines erfindungsgemäßen Elektronik-Gehäuses,
- Fig. 2: eine Vorderansicht einer erfindungsgemäßen, als Berührungsschutz dienenden Abdeckplatte,
- Fig. 3: eine Rückansicht der Abdeckplatte gemäß Fig. 2,
- Fig. 4: eine perspektivische Ansicht einer erfindungsgemäßen Berührungsschutz-Abdeckplatte gemäß Fig. 2 im montierten Zustand auf einer Elektronik-Leiterplatte mit einem Lüfterrad eines Innenlüfters eines Elektromotors,
- Fig. 5: eine Vorderansicht einer alternativen Ausführungsform einer erfindungsgemäßen Berührungsschutz-Abdeckplatte,
- Fig. 6: eine Rückansicht der Berührungsschutz-Abdeckplatte gemäß Fig. 5 und
- Fig. 7: einen Schnitt durch einen Elektromotor unter Verwendung eines Elektronik-Gehäuses gemäß Fig. 1.

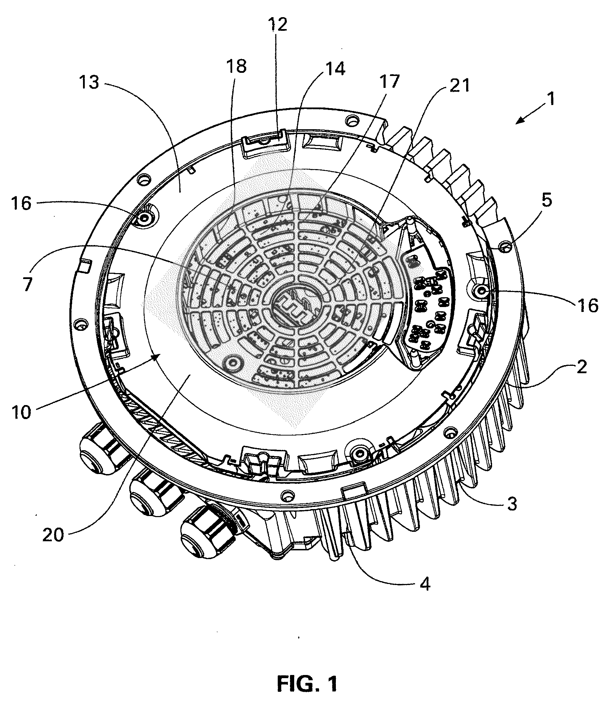

In den Fig. 1 bis 7 sind gleiche Teile bzw. funktionsgleiche Teil mit denselben Bezugszeichen gekennzichnet.

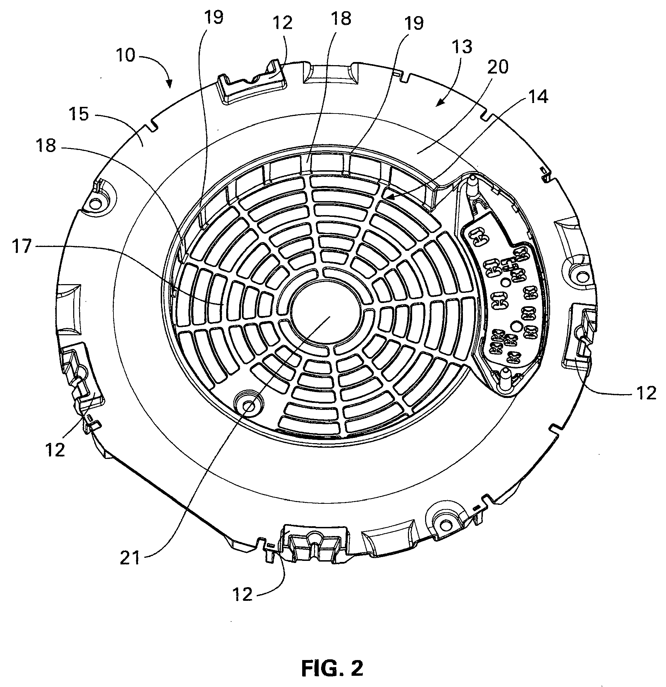

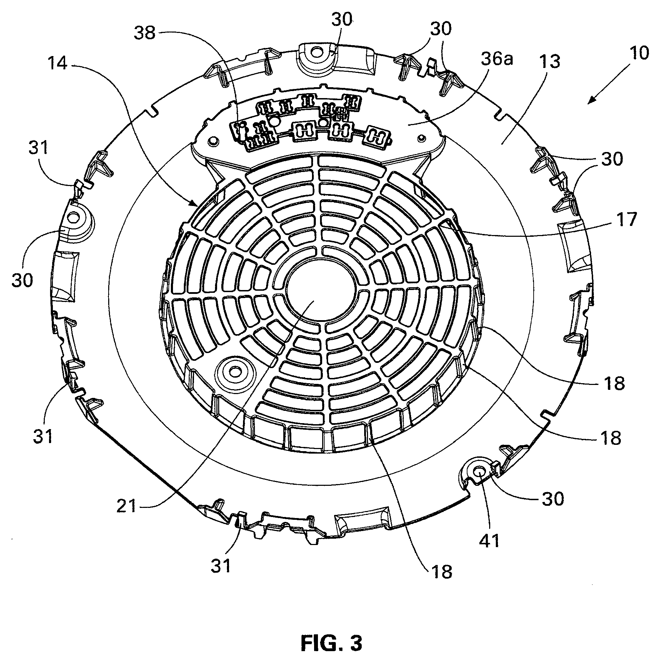

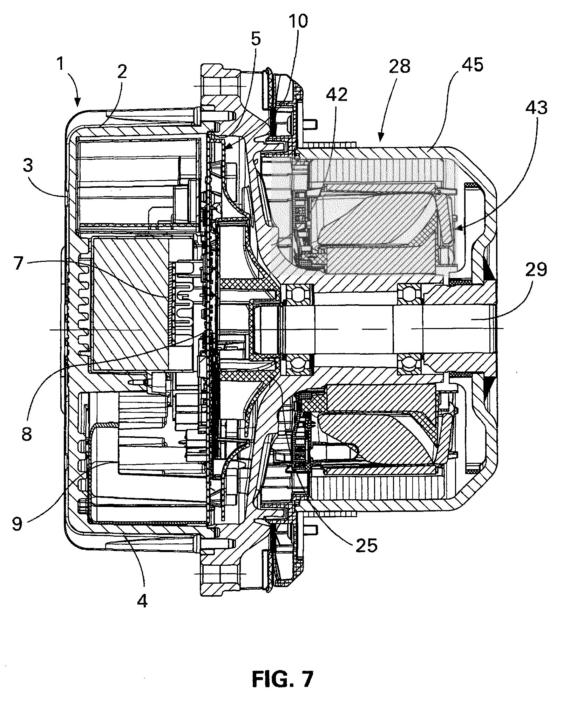

Wie sich aus den Fig. 1 bis 3 ergibt, besteht ein erfindungsgemäßes Elektronik-Gehäuse 1 aus einem Gehäuseaufnahmeteil 2 mit einem Gehäuseboden 3 und einer diese umfassenden Gehäusewandung 4 und einer dem Gehäuseboden 3 gegenüberliegenden Gehäuseöffnung 5. In dem Gehäuseaufnahmeteil 2 ist ein Motorelektronikbauteil 7 angeordnet, das eine Elektronik-Leiterplatte 8 aufweist sowie eine Motorsteuereinheit 9. Die Elektronik-Leiterplatte 8 ist gegenüber der Gehäuseöffnung 5 zweckmäßigerweise nach innen in Richtung auf den Gehäuseboden 3 versetzt angeordnet. Die Gehäuseöffnung 5 wird mit einer Berührungsschutz-Abdeckplatte 10 verschlossen, die einen Berührungsschutz für die Elektronik-Leiterplatte 8 bildet. Die Berührungsschutz-Abdeckplatte 10 ist insbesondere als Kunststoff-Spritzgussteil aus einem elektrisch isolierenden Material hergestellt. Die Berührungsschutz-Abdeckplatte 10 besitzt eine Außenkontur, die zweckmäßigerweise einer Innenkontur der Gehäuseöffnung 5 angepasst ist, so dass die Berührungsschutz-Abdeckplatte 10 in die Gehäuseöffnung 5 passend eingesetzt werden kann. Die Berührungsschutz-Abdeckplatte 10 weist an ihrem Umfangsrand Führungsschienen 12 auf, die für eine Verbindung zu dem Statorflansch 42, siehe Fig. 7, dienen. Im dargestellten Ausführungsbeispiel besitzt die erfindungsgemäße Berührungsschutz-Abdeckplatte 10 ein äußeres umlaufendes Ringteil 13 und ein inneres Gitterteil 14. Das Ringteil 13 besitzt eine durchgehend geschlossene, ebene Wandung 15 und dient zum Befestigen der Berührungsschutz-Abdeckplatte 10 an der Elektronik-Leiterplatte 8 bzw. an dem Motorelektronikbauteil 7. Eine derartige Befestigung kann beispielsweise mittels Schrauben 16 und/oder Rasthaken 31 erfolgen. Das Gitterteil 14 besteht aus einem ebenen Bodenabschnitt 17, der gegenüber der Wandung 15 des Ringteils 13 im montierten Zustand des Berührungsschutzteils bzw. der Berührungsschutz-Abdeckplatte 10 in Richtung auf den Gehäuseboden 3 versetzt angeordnet ist. An seinem Außenrand ist der Bodenabschnitt 17 über senkrecht zum Bodenabschnitt 17 verlaufende, einzelne Verbindungsstege 18 mit dem Ringteil 13 verbunden. Die Verbindungsstege 18 ragen über die Wandung 15 mit ihren dem Bodenabschnitt 17 gegenüberliegenden Enden 19 hinaus, so dass die Wandung 15 mit den Enden 19 über einen insbesondere konkav geformten Übergangsabschnitt 20 verbunden ist. Weiterhin weist der Bodenabschnitt 17 eine mittige, vorzugsweise kreisförmige Öffnung 21 auf. Wie sich insbesondere aus den Fig. 2, 3 und 4 ergibt, ist das Gitterteil 14 derart dimensioniert, dass es zur Aufnahme eines Lüfterrades 25 dient. Das Lüfterrad 25 ist Bestandteil eines Innenlüfters eines Elektromotors 28, siehe Fig. 7, und wird über eine Motorwelle 29 des Elektromotors 28 angetrieben. Hierbei taucht das Lüfterrad 25 in das Gitterteil 14 ein, so dass zwischen dem Lüfterrad 25 und der Elektronik-Leiterplatte 8 befindliche Luft umgewälzt und somit eine verbesserte Kühlwirkung erreicht wird. Weiterhin ist in Fig. 3 zu erkennen, dass das Ringteil 13 auf seiner dem Gehäuseboden 3 zugekehrten Seite Abstandhalter 30 aufweist, mit denen die Berührungsschutz-Abdeckplatte 10 an der Elektronik-Leiterplatte 8 anliegt. Die Abstandhalter 30 sind derart bemessen, dass das Gitterteil 14 keine Berührung mit der Elektronik-Leiterplatte 8 im montierten Zustand besitzt.

Es liegt ebenfalls im Rahmen der vorliegenden Erfindung, wenn das Ringteil 13 nicht über seinen gesamten Umfang eine geschlossene Wandung 15 aufweist, vielmehr kann diese Wandung 15 teilweise auch gitterförmig ausgebildet sein.

Weiterhin ist insbesondere in Fig. 3 zu erkennen, dass am Umfangsrand des Ringteils 13 Rasthaken 31 ausgebildet sein können, mit denen die Berührungsschutz-Abdeckplatte 10 an der Elektronik-Leiterplatte 8 rastend befestigt werden kann.

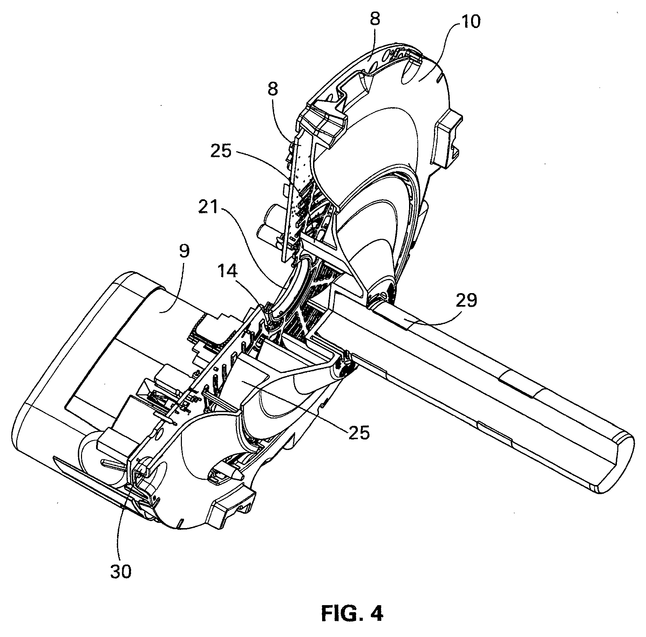

In Fig. 4 ist dargestellt, wie die erfindungsgemäße Berührungsschutz-Abdeckplatte 10 mit der Elektronik-Leiterplatte 8 verbunden ist und wie das Lüfterrad 25 in die von dem Gitterteil 14 gebildete Aufnahmekammer eintaucht. Hierbei kann über die mittige Öffnung 21 der Luftstrom in das Lüfterrad 25 einströmen und wird von diesem radial nach außen durch die von den Stegen 18 begrenzten seitlichen Öffnungen des Gitterteils 14 ausgeblasen.

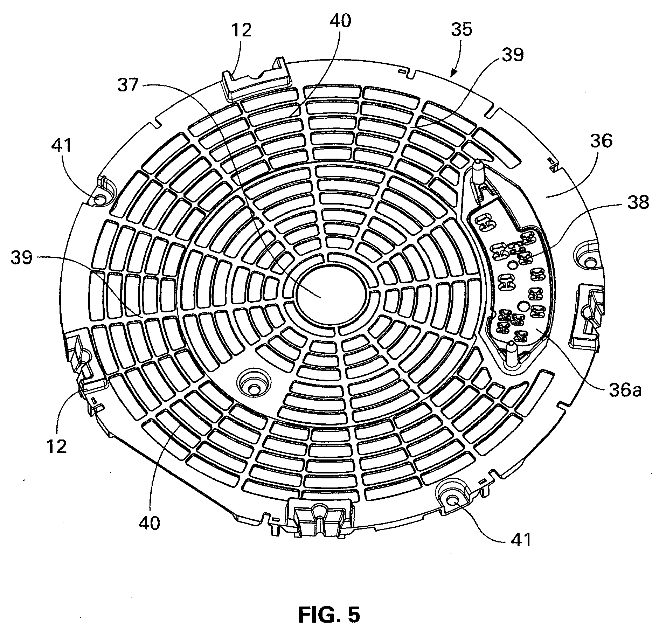

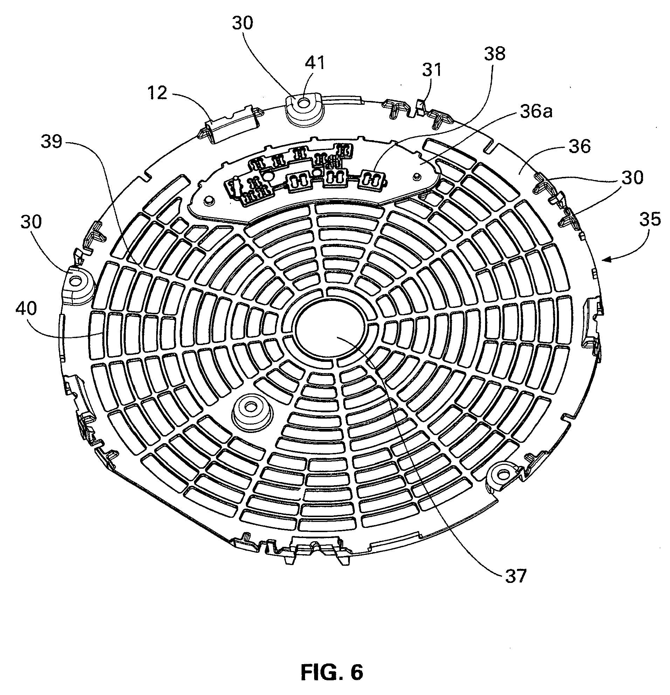

In den Fig. 5 und 6 ist eine alternative Ausbildung eines erfindungsgemäßen Berührungsschutz-Bauteils bzw. einer Berührungsschutz-Abdeckplatte 10 dargestellt. Diese Abdeckplatte 35 besitzt eine Wandung 36, die im Wesentlichen ganzflächig als Gitterstruktur ausgebildet ist. Hierbei besitzt die Wandung 36 eine mittige Öffnung 37, von deren Rand aus radiale Gitterstege 39 bis zum Umfangsrand der Abdeckplatte 35 verlaufen. Die einzelnen Gitterstege 39 sind durch umfangsgemäß verlaufende stegförmige Streben 40 miteinander verbunden. An dem Umfangsrand der Abdeckplatte 35 sind die vorbeschriebenen Abstands- und Befestigungs- und Führungselemente ausgebildet. In den Abstandshaltern 30 sind wie bei dem vorbeschriebenen Ausführungsbeispiel ebenfalls Löcher 41 vorgesehen, durch die Befestigungsschrauben hindurchgesteckt werden können.

Weiterhin weist die Abdeckplatte 35 einen geschlossenen Wandungsabschnitt 36a auf, in dem Fügehilfen 38 zum Durchkontaktieren von elektrischen Kontakten der Motorelektronik ausgebildet sind, die zur elektrischen Verbindung der Motorelektronik mit einem Antriebsteil des Elektromotors dienen. Ein entsprechender geschlossener Wandungsabschnitt 36a ist ebenfalls bei der Berührungsschutz-Abdeckplatte 10 gemäß dem Ausführungsbeispiel der Fig. 2 und 3 vorhanden.

Wie sich aus Fig. 7 ergibt, wird das erfindungsgemäße Elektronik-Gehäuse 1 an einen Statorflansch 42 eines Stators 43 des Elektromotors 28 beispielsweise angeschraubt. Der Stator 43 besitzt einen Statorrohrabschnitt, in dem eine Motorwelle 29 gelagert ist, an der endseitig ein topfförmiger Rotor 45 eines Außenläufermotors befestigt ist. Wie aus Fig. 7 ersichtlich ist, ist das Lüfterrad 25 des Innenlüfters zwischen dem Stator 43 und der erfindungsgemäßen Berührungsschutz-Abdeckplatte 10 angeordnet. Der Statorflansch 42 besitzt zur Erleichterung der Montage des Elektronikgehäuses 1 an seinem Umfangsrand mehrere, nicht dargestellte Führungszapfen, die sich vom Umfangsrand des Statorflansches in Richtung des Elektronik-Gehäuses 1 bzw. der Berührungsschutz-Abdeckplatte 10 erstrecken. Diese Führungszapfen sollen in Verbindung mit den Führungsschienen 12 der Berührungsschutz-Abdeckplatte 10 die Montage des kompletten Elektronik-Gehäuses 1 erleichtern. Alternativ können die Führungszapfen an der Berührungsschutz-Abdeckplatte 10 und die Führungsschienen 12 am Statorflansch 42 ausgebildet sein.

Erfindungsgemäß liegen die Berührungsschutz-Abdeckplatten 10, 35 im Bereich der Gehäuseöffnung 5 und verschließen das Elektronik-Gehäuse 1 gegenüber dem Stator 43 im Bereich des Elektromotors. Hierbei dienen die Berührungsschutz-Abdeckplatten 10, 35 nicht als Strömungsleitmittel, sondern als Berührungsschutz. Durch die im Außenbereich vorhandenen Führungsschienen 12 wird der Fügeprozess erleichtert, da diese Führungsschienen 12 bei der Montage vorteilhafterweise voreilend mit den Führungszapfen des Statorflansches 42 in Eingriff kommen und so die gesamte im Elektronik-Gehäuse 1 befindliche Steuereinheit vorzentriert wird. Hierbei ist die Steuereinheit auf Grund der Anordnung der Führungsschienen 12 nur in einer Position fügbar. Nach dem Vorzentrieren kommt die in der Abdeckplatte integrierte Fügehilfe 38 zum Eingriff, welche zur positionierten Kontaktierung der elektrischen Verbindungen zwischen Elektronik und Stator 43 dient. Befestigt wird die erfindungsgemäße Berührungsschutz-Abdeckplatte 10, 35 entweder über die Rasthaken 31 in der Elektronik-Leiterplatte 8 und/oder durch Verschrauben zusammen mit der Elektronik-Leiterplatte 8 am Elektronik-Gehäuse 1.

Die Ausführungsform gemäß den Fig. 5 und 6, bei denen die Abdeckplatte 35 als ebener Berührungsschutz aufgebaut ist, ist dann von Vorteil, wenn sich unterhalb der Elektronik-Leiterplatte zwischen dieser und dem Statorflansch zu wenig Bauraum befindet, um eine Abdeckplatte mit Vertiefung unterzubringen.

## Patentansprüche

1. Elektronik-Gehäuse (1) für einen Elektromotor, bestehend aus einem Gehäuseaufnahmeteil (2) mit einem Gehäuseboden (3) und einer den Gehäuseboden (3) umfassenden Gehäusewandung (4) und mit einer dem Gehäuseboden (3) gegenüberliegenden Gehäuseöffnung (5), wobei in dem Gehäuseaufnahmeteil (2) ein Motorelektronik-Bauteil mit einer Elektronik-Leiterplatte (8) angeordnet ist, die parallel zur Öffnungsebene der Gehäuseöffnung (5) angeordnet ist,
**dadurch gekennzeichnet, dass** auf der Elektronik-Leiterplatte (8) oder am Motorelektronik-Bauteil auf von einer dem Gehäuseboden (3) abgekehrten Seite der Elektronik-Leiterplatte (8) ein diese flächenmäßig abdeckendes Berührungsschutz-Bauteil (10, 35) aus einem elektrisch isolierenden Material lösbar angeordnet ist, das zumindest teilweise eine Gitterstruktur (14, 39, 40) als Luftdurchlass aufweist, wobei
das Berührungsschutz-Bauteil (10,35) als Abdeckplatte (10) ausgebildet ist, mit der die Gehäuseöffnung (5) verschlossen wird, wobei die Abdeckplatte (10) eine Außenkontur besitzt, die einer Innenkontur der Gehäuseöffnung (5) angepasst ist.

2. Elektronik-Gehäuse (1) nach Anspruch 1,
**dadurch gekennzeichnet, dass** die Abdeckplatte (10) ein äußeres umlaufendes Ringteil (13) und ein inneres Gitterteil (14) aufweist.

3. Elektronik-Gehäuse (1) nach Anspruch 2,
**.dadurch gekennzeichnet, dass** das Ringteil (13) eine durchgehend geschlossene ebene Wandung (15) besitzt, und das Gitterteil (14) aus einem ebenen Bodenabschnitt (17) besteht, der gegenüber der Wandung (15) des Ringteils (13) im montierten Zustand der Abdeckplatte (10) in Richtung auf den Gehäuseboden (3) versetzt angeordnet ist, und der Bodenabschnitt (17) an seinem Außenrand über senkrecht zum Bodenabschnitt (17) verlaufende, einzelne Verbindungsstege (18) mit dem Ringteil (13) verbunden ist.

4. Elektronik-Gehäuse (1) nach Anspruch 3,
**dadurch gekennzeichnet, dass** die Verbindungsstege (18) über die Wandung (15) mit ihren dem Bodenabschnitt (17) gegenüberliegenden Enden (19) hinausragen, so dass die Wandung (15) mit den Enden (19) über einen insbesondere konkav geformten Übergangsabschnitt verbunden ist.

5. Elektronik-Gehäuse (1) nach Anspruch 3 oder 4,
**dadurch gekennzeichnet, dass** der Bodenabschnitt (17) eine mittige, vorzugsweise kreisförmige Öffnung (21) aufweist, und das Gitterteil (14) derart dimensioniert ist, dass es zur Aufnahme eine Lüfterrades (25) dient, das Bestandteil eines innenlüfters eines Elektromotors (28) ist und über eine Motorwelle (29) des Elektromotors (28) angetrieben wird, wobei das Lüfterrad (25) in das Gitterteil (14) eintaucht, so dass zwischen dem Lüfterrad (25) und der Elektronik-Leiterplatte (8) befindliche Luft umgewälzt wird.

6. Elektronik-Gehäuse (1) nach Anspruch 1,
**dadurch gekennzeichnet, dass** das Berührungsschutz-Bauteil aus einer Abdeckplatte (35) besteht, mit einer Wandung (36), die ganzflächig als Gitterstruktur ausgebildet ist, wobei die Wandung (36) eine mittige Öffnung (37) aufweist, von deren Rand aus radiale Gitterstege (39) bis zum Umfangsrand der Abdeckplatte (35) verlaufen, und die einzelnen Gitterstege (39) durch umfangsgemäß verlaufende, stegförmige Streben (40) miteinander verbunden sind.

7. Elektronik-Gehäuse (1) nach einem der Ansprüche 2 bis 6,
**dadurch gekennzeichnet, dass** das Ringteil (13) oder der Umfangsrand der Abdeckplatte (35) auf seiner dem Gehäuseboden (3) zugekehrten Seite Abstandhalter (30) aufweist, mit denen die Abdeckplatte (10, 35) an der Elektronik-Leiterplatte (8) anliegt.

8. Elektronik-Gehäuse (1) nach einem der Ansprüche 2 bis 7,
**dadurch gekennzeichnet, dass** das Ringteil (13) über seinen gesamten Umfang eine geschlossene Wandung (15) aufweist oder diese Wandung (15) teilweise auch gitterförmig ausgebildet ist.

9. Elektronik-Gehäuse (1) nach einem der Ansprüche 2 bis 8,
**dadurch gekennzeichnet, dass** am Umfangsrand des Ringteils (13) oder der Abdeckplatte (35) Rasthaken (31) ausgebildet sind, mit denen die Abdeckplatte (10, 35) an der Elektronik-Leiterplatte (8) rastend befestigt ist.

10. Elektronik-Gehäuse (1) nach einem der Ansprüche 1 bis 9, **dadurch gekennzeichnet, dass** die Abdeckplatte (10, 35) einen geschlossenen Wandungsabschnitt (36a) aufweist, in dem Fügehilfen (38) zum Durchkontaktieren von elektrischen Kontakten der Motorelektronik ausgebildet sind.

11. Elektronik-Gehäuse (1) nach einem der Ansprüche 1 bis 10,
**dadurch gekennzeichnet, dass** die Berührungsschutz-Abdeckplatte (10) an ihrem Umfangsrand Führungsmittel (12) aufweist, die mit Führungsmitteln an einem Statorflansch (42) eines Stators (43) eines Elektromotors (28) bei einer Montage des Elektronik-Gehäuses (1) zusammenwirken.

## Claims

1. Electronics housing (1) for an electric motor, consisting of a housing receiving part (2) comprising a housing floor (3), a housing wall (4) incorporating the housing floor (3), and comprising a housing opening (5) opposite the housing floor (3), a motor electronics component comprising an electronics printed circuit board (8) being arranged in the housing receiving part (2), which electronics printed circuit board extends parallel to the opening plane of the housing opening (5), **characterised in that** a contact-protection component (10, 35) made of an electrically insulating material and covering the surface of the electronic printed circuit board is removably arranged on the electronic printed circuit board (8) or on the motor electronics component on the side of the electronic printed circuit board (8) facing away from the housing floor (3), at least part of which contact-protection component has a grille structure (14, 39, 40) as ventilation, wherein
the contact-protection component (10, 35) is formed as a cover plate (10) used to seal the housing opening (5), the cover plate (10) having an outer contour which is adapted to an inner contour of the housing opening (5).

2. Electronics housing (1) according to claim 1, **characterised in that** the cover plate (10) has an outer circumferential ring part (13) and an inner grille part (14).

3. Electronics housing (1) according to claim 2, **characterised in that** the ring part (13) has a continuously closed planar wall (15), and the grille part (14) consists of a planar floor portion (17) which is arranged so as to be offset in the direction of the housing floor (3) from the wall (15) of the ring part (13) in the assembled state of the cover plate (10), and the floor portion (17) is connected at its outer edge to the ring part (13) by means of individual connecting webs (18) extending perpendicularly to the floor portion (17).

4. Electronics housing (1) according to claim 3, **characterised in that** the connecting webs (18) project beyond the wall (15) via their ends (19) opposite the floor portion (17), such that the wall (15) is connected to the ends (19) over an in particular concavely formed transition portion.

5. Electronics housing (1) according to either claim 3 or claim 4, **characterised in that** the floor portion (17) has a central, preferably circular, opening (21), and the grille part (14) is sized to receive a fan wheel (25), which is a component of an internal fan of an electric motor (28) and is driven by a motor shaft (29) of the electric motor (28), the fan wheel (25) dipping into the grille part (14), so that air located between the fan wheel (25) and the electronic printed circuit board (8) circulates.

6. Electronics housing (1) according to claim 1, **characterised in that** the contact-protection component consists of a cover plate (35) comprising a wall (36) formed over its entire surface as a grille structure, the wall (36) having a central opening (37), from the edge of which radial grille webs (39) extend as far as the circumferential edge of the cover plate (35), and the individual grille webs (39) being interconnected by circumferentially extending web-like struts (40).

7. Electronics housing (1) according to any of claims 2 to 6, **characterised in that** either the ring part (13) or the circumferential edge of the cover plate (35) has spacers (30) on its side facing the housing floor (3), via which spacers the cover plate (10, 35) bears on the electronic printed circuit board (8).

8. Electronics housing (1) according to any of claims 2 to 7, **characterised in that** the ring part (13) has a closed wall (15) over its entire circumference or this wall (15) is also in the form of a grille in part.

9. Electronics housing (1) according to any of claims 2 to 8, **characterised in that** latching hooks (31) are formed on the circumferential edge of the ring part (13) or of the cover plate (35) and used to fasten the cover plate (10, 35) to the electronic printed circuit board (8) in a latching manner.

10. Electronics housing (1) according to any of claims 1 to 9, **characterised in that** the cover plate (10, 35) has a closed wall portion (36a) in which joining aids (38) are formed for through-contacting of electrical contacts of the motor electronics.

11. Electronics housing (1) according to any of claims 1 to 10, **characterised in that** the contact-protection cover plate (10) has guide means (12) at its circumferential edge, which cooperate with guide means on a stator flange (42) of a stator (43) of an electric motor (28) during assembly of the electronics housing (1).

## Revendications

1. Boîtier électronique (1) pour un moteur électrique, constitué d'un élément de réception de boîtier (2) avec un fond de boîtier (3) et une paroi de boîtier (4) entourant le fond de boîtier (3) et avec une ouverture de boîtier (5) faisant face au fond de boîtier (3), dans lequel dans l'élément de réception de boîtier (2) est disposé un composant électronique de moteur avec un circuit imprimé électronique (8), qui est disposé parallèlement au plan d'ouverture de l'ouverture de boîtier (5),
**caractérisé en ce que** sur le circuit imprimé électronique (8) ou au niveau du composant électronique de moteur sur une face du circuit imprimé électronique (8) opposée au fond de boîtier (3), un composant de protection contre le contact (10, 35) couvrant sa surface en un matériau électriquement isolant est disposé de manière amovible, qui présente au moins en partie une structure de grille (14, 39, 40) comme passage d'air, dans lequel
le composant de protection contre le contact (10, 35) est réalisé sous forme de plaque de recouvrement (10), avec laquelle l'ouverture de boîtier (5) est fermée, dans lequel la plaque de recouvrement (10) dispose d'un contour extérieur qui est adapté au contour intérieur de l'ouverture de boîtier (5).

2. Boîtier électronique (1) selon la revendication 1, **caractérisé en ce que** la plaque de recouvrement (10) présente un élément annulaire périphérique extérieur (13) et un élément de grille intérieur (14).

3. Boîtier électronique (1) selon la revendication 2, **caractérisé en ce que** l'élément annulaire (13) dispose d'une paroi plane fermée en continu (15) et l'élément de grille (14) est constitué d'une section de fond plane (17), qui est disposée de manière décalée par rapport à la paroi (15) de l'élément annulaire (13) dans l'état monté de la plaque de recouvrement (10) en direction du fond de boîtier (3) et la section de fond (17) est reliée au niveau de son bord extérieur à l'élément annulaire (13) via des nervures de liaison (18) individuelles s'étendant perpendiculairement à la section de fond (17).

4. Boîtier électronique (1) selon la revendication 3, **caractérisé en ce que** les nervures de liaison (18) dépassent de la paroi (15) avec leurs extrémités (19) faisant face à la section de fond (17), de sorte que la paroi (15) est reliée aux extrémités (19) via une section de transition formée en particulier de manière concave.

5. Boîtier électronique (1) selon la revendication 3 ou 4, **caractérisé en ce que** la section de fond (17) présente une ouverture centrée, de préférence circulaire (21), et l'élément de grille (14) est dimensionné de telle sorte qu'il sert à la réception d'une roue de ventilateur (25), qui fait partie d'un ventilateur intérieur d'un moteur électrique (28) et est entraînée par le biais d'un arbre de moteur (29) du moteur électrique (28), dans lequel la roue de ventilateur (25) plonge dans l'élément de grille (14), de sorte que l'air se trouvant entre la roue de ventilateur (25) et le circuit imprimé électronique (8) est mis en circulation.

6. Boîtier électronique (1) selon la revendication 1, **caractérisé en ce que** le composant de protection contre le contact est constitué d'une plaque de recouvrement (35), avec une paroi (36), dont toute la surface est réalisée sous forme de structure de grille, dans lequel la paroi (36) présente une ouverture centrée (37), du bord de laquelle des nervures de grille (39) radiales s'étendent jusqu'au bord périphérique de la plaque de recouvrement (35), et les différentes nervures de grille (39) sont reliées les unes aux autres par des entretoises (40) en forme de nervures s'étendant de manière périphérique.

7. Boîtier électronique (1) selon l'une quelconque des revendications 2 à 6,
**caractérisé en ce que** l'élément annulaire (13) ou le bord périphérique de la plaque de recouvrement (35) présente sur sa face tournée vers le fond de boîtier (3) des écarteurs (30), avec lesquels la plaque de recouvrement (10, 35) s'appuie contre le circuit imprimé électronique (8).

8. Boîtier électronique (1) selon l'une quelconque des revendications 2 à 7,
**caractérisé en ce que** l'élément annulaire (13) présente sur l'ensemble de sa périphérie une paroi fermée (15) ou cette paroi (15) est réalisée en partie aussi sous forme de grille.

9. Boîtier électronique (1) selon l'une quelconque des revendications 2 à 8,
**caractérisé en ce qu'**au niveau du bord périphérique de l'élément annulaire (13) ou de la plaque de recouvrement (35), des crochets d'encliquetage (31) sont réalisés avec lesquels la plaque de recouvrement (10, 35) est fixée par encliquetage au circuit imprimé électronique (8).

10. Boîtier électronique (1) selon l'une quelconque des revendications 1 à 9, **caractérisé en ce que** la plaque de recouvrement (10, 35) présente une section de paroi (36a) fermée dans laquelle des auxiliaires de jonction (38) sont réalisés pour la mise en contact de contacts électriques de l'électronique de moteur.

11. Boîtier électronique (1) selon l'une quelconque des revendications 1 à 10,
**caractérisé en ce que** la plaque de recouvrement de protection contre le contact (10) présente au niveau de son bord périphérique des moyens de guidage (12), qui coopèrent avec des moyens de guidage au niveau d'une bride de stator (42) d'un stator (43) d'un moteur électrique (28) lors d'un montage du boîtier électronique (1).
